(19) Europäisches Patentamt / European Patent Office / Office européen des brevets

(11) **EP 4 224 070 A1**

(12) **EUROPEAN PATENT APPLICATION**

(43) Date of publication:
**09.08.2023 Bulletin 2023/32**

(21) Application number: **22155236.7**

(22) Date of filing: **04.02.2022**

(51) International Patent Classification (IPC):
***F24C 15/20*** *(2006.01)*

(52) Cooperative Patent Classification (CPC):
**F24C 15/2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ELECTROLUX APPLIANCES AKTIEBOLAG**
**105 45 Stockholm (SE)**

(72) Inventors:
- **FOIERA, Riccardo**
  **47122 Forli (IT)**
- **VALPIANI, Nicola**
  **47122 Forli (IT)**
- **BEKJAROVA, Milka**
  **47122 Forli (IT)**

(74) Representative: **Electrolux Group Patents**
**AB Electrolux**
**Group Patents**
**S:t Göransgatan 143**
**105 45 Stockholm (SE)**

(54) **COOKER HOOD**

(57)     The invention relates to a cooker hood (1), comprising
- a fan unit (10) for extracting cooking vapours,
- a filter unit (20) for filtering the cooking vapours,
- a first detecting unit (31) for detecting, in particular sensing, a first series of first operating states (83), in particular indicators for rotational states, of the hood,
- a second detecting unit (32) for detecting, in particular sensing, a second series of second operating states (84), in particular indicators for air dirtiness states, of or at the hood,
- an evaluation unit (40) for evaluating third operating states (90), in particular filter states, based at least on the first series of first operating states (83) and the second series of second operating states (84) of the hood (1) and
- a notification unit (72, 73), in particular display unit, for indicating or triggering a notification, in particular a filter cleaning or replacement notification or reminder, based on the third operating states (63).

FIG 1

EP 4 224 070 A1

**Description**

The present invention relates to a cooker hood with a filter unit.

BACKGROUND OF THE INVENTION

Cleaning reminders for cooker hoods to clean filter units, for example a grease or charcoal filter unit, are usually provided according to the number of hours the hood, in particular a fan or fan unit of the hood, is running.
There is also the possibility of detecting a dirtiness of a filter unit with regard to air flowing through the hood detected by means of air flow sensors (EP314085A1, US20070023420A1 or DE102005025787B3) .
Considering cooker hoods, there is an arrangement with sensors described in US2006278216A1.
A problem to overcome is that notifications, in particular filter cleaning notifications, based on flow sensors can be not reliable over time since flow sensors can get dirty over time.
A further problem to overcome is or can in particular be to be able to indicate or trigger, in particular show, a notification or message, in particular on a hood or a remote or mobile device, more in particular for a connected hood, for the user.
A further problem for overcoming is to avoid unnecessary cleaning on a filter unit if not really needed.

SUMMARY OF THE INVENTION

It is an objective of the embodiments of the invention to provide a cooker hood with an improved notification, in particular filter cleaning notification or reminder. The objective is solved by the features of the independent claims. Preferred embodiments are given in the dependent claims. If not explicitly indicated otherwise, embodiments of the invention can be freely combined with each other.
According to claim 1, the invention relates to a cooker hood, comprising

- a fan unit for extracting cooking vapours,
- a filter unit for filtering the cooking vapours,
- a first detecting unit for detecting, in particular sensing, a first series of first operating states, in particular indicators for rotational states, of the hood, in particular of the cooker hood,
- a second detecting unit for detecting, in particular sensing, a second series of second operating states, in particular indicators for air dirtiness states, of or at the hood, in particular the cooker hood,
- an evaluation unit for evaluating third operating states, in particular filter states, based at least on the first series of first operating states and the second series of second operating states of the hood, in particular of the cooker hood, and
- a notification unit, in particular display and/or communication unit, for indicating or triggering a notification, in particular a filter cleaning or replacement notification or reminder, based on the third operating states.

The invention in particular provides notification, preferably a cleaning reminder, for a filter unit present in a cooker hood adaptable to the kind of aspiration done or food cooked, in order to give to the user a more precise indication of when he needs to replace or clean a filter element in the filter unit. Preferably, the possibility to weight the kind of aspiration and set the notification and/or reminder according to the quantity of air passing through the filters improves the usability of the cooker hood, in particular in respect to customer experience.
Preferably, compared to previous notifications or reminders that are indicated or triggered based a fixed duration or operation time of the fan unit and/or filter unit, an enhancement is to weight the dirtiness of the air flow through the fan unit and/or filter unit and the quantity of it passing through the filter unit in order to have a better evaluation of the cleaning frequency of the cooker hood.
In particular, flow sensors are not considered for this purpose since they can get dirty and are not reliable along the time in terms of measurements. In particular, a more precise notification, in particular cleaning reminder counter, according to the invention comprises no need of flow sensors. Instead, preferably the usage of data, in particular operating states, available in, for or at the cooker hood by means of already present sensors, for example temperature or air quality sensors, is possible.
Preferably, the evaluation or calculation of the notification, in particular cleaning reminder, for the cooker hood is based on the available information and sensors present within or near the hood, without requiring particular sensors for this purpose. An advantage of the invention is to reuse the sensors already embedded in or at the cooker hood to get a better estimated dirtiness of the filter unit and set or trigger a filter cleaning reminder. In particular, no mounting of a dedicated flow sensor that will get dirty and not be precise along the time is necessary.
In particular, the physical amount of dirt deposited on the filter unit or filter element, or the air passing it are not measured. In particular, the invention is overcoming the problem of cleaning reminder indication based on flow sensors since flow sensors get dirty and are not reliable along the time.

Advantageously, a more precise indication for the cleaning of the filter unit tuned on the, preferably real, air flow passing through the filter unit and the kind of cooking performed related to the dirtiness generated is provided. Preferably, a cooker hood according to the invention, in particular with smarter cleaning reminder features, is able to avoid unnecessary cleaning on the filter unit if not really needed. Normally grease filters can be cleaned, but charcoal filters need to be replaced.

In particular, an indicator for a rotational state of the hood, in particular of the cooker hood, is or comprises a power level of the fan unit, more in particular fan, a speed of the fan unit, more in particular fan. Preferably, based on the rotational state, an air flow through the cooker hood is estimated, obtained or computed.

In particular, a rotational state of the hood, in particular of the cooker hood, refers to and/or is a rotational state of the fan unit, more in particular fan.

In particular, an air dirtiness state of the hood, in particular of the cooker hood, is or comprises a degree of dirtiness of an air flow through the cooker hood, in particular the filter unit. Preferably, based on the air dirtiness state, a dirtiness of an air flow through the cooker hood, in particular the filter unit, is estimated, obtained or computed.

In particular, a series of operating states is a sequence of operating states over the time. In particular, the operating states can be obtained with constant or different time intervals. In particular, an operating state can be defined by an operating state as such and a duration indicating how long the operating state is maintained, for example a time span or interval like 1 second.

In an embodiment, the first detecting unit comprises no sensor and/or detects a fan speed as first operating state based on a power level of the hood, in particular as sensor less solution.

In an embodiment, the second detecting unit comprises at least one sensor unit. In particular, the at least one sensor unit is or comprises an air quality, temperature and/or humidity sensor placed on or at the cooker hood. In particular, the second operating state is or corresponds to an air quality, temperature and/or humidity detected by the at least one sensor unit.

In an embodiment, the second detecting unit comprises at least one sensor unit. In particular, the at least one sensor unit comprises or is a camera, placed, installed or mounted on or at the cooker hood for identifying the type of food cooked. In particular, the second operating state is or corresponds to a type of food identified by means or the sensing unit.

In particular, the second operating state is a cooking factor. In particular, signals and/or inputs are used for evaluation of the cooking factor, Kc.

In an embodiment, the temperature sensor is placed, mounted or installed on or at the cooker hood or on or at a hob, in particular at at least one cooking zone.

In an embodiment, the air quality sensor is or comprises a Total Volatile Organic Components, TVOC, sensor placed on or at the hood. Advantageously, a Total Volatile Organic Components, TVOC, sensor to measure the grease particles on the air and hence dirtiness of the air is used, in particular for detecting the series of second operating states.

In one or more further embodiments, the food cooked is detected using food recognition capabilities from camera sensors or signals coming from the hob or from a smartphone, in particular for detecting the series of second operating states.

In an embodiment, the second detecting unit comprises no sensor.

In particular, the second detecting unit is provided to detect the second operating states by means of a user input on a user interface.

In particular, the second detecting unit is provided to detect the second operating states by receiving data from a hob, in particular place under the cooker hood.

In particular, the second detecting unit is provided to detect the second operating states by receiving data from another appliance, in particular an air purifier or air conditioner.

In an embodiment, the second detecting unit is provided to detect the second operating states from an interface unit.

In an embodiment, the interface unit comprises an input unit provided to receive user inputs on a user interface.

In an embodiment, the interface unit comprises a communication unit provided to receive data from a hob, in particular placed under the cooker hood.

In an embodiment, the interface unit comprises a communication unit provided to receive data from another appliance, in particular an air purifier or air conditioner.

In an embodiment, a second operating state is or corresponds to a user input, data from a hob and/or data from another appliance, in particular received from the interface unit.

In an embodiment, second operating states from other connected appliances such as air purifiers, air conditioners, in particular in the kitchen and/or the same room or interior space, are communicated to the cooker hood.

In an embodiment, the second detecting unit detects the second operating states from a hob by means of a communication unit, in particular by means of a hob-to-hood communication for transmitting which recipe or food kind is under cooking process at the hob at a point in time.

In an embodiment, the second detecting unit detects the second operating states from a hob by means of a communication unit, in particular by means of a hob-to-hood communication for transmitting the temperatures of the cooking zones of the hob at a point in time.

Preferably, based on the understanding of the food cooked as useful information, the second operating states are obtained, as a basis for the notification, in particular for a cleaning reminder estimation.

Preferably, the second operating state is a cooking factor.

In an embodiment, the second detecting unit is provided to process input signals from at least one connected device and to take a decision which of the input signals to use as second operating states.

In an embodiment, the input signals are seen as sensor values being part of an electronics system present for the cooker hood.

In an embodiment, the evaluation unit comprises a memory unit for storing data.

In an embodiment, the evaluation unit comprises a first mapping unit for mapping each of the first operating states to a mapped first operating state by means of a first mapping table stored in the memory unit.

In an embodiment, the evaluation unit comprises a second mapping unit for mapping each of the second operating states to a mapped second operating state by means of a second mapping table stored in the memory unit.

In an embodiment, the mapped first operating state, Ks, is a value taken from a table characteristic stored in the memory unit for the cooker hood, in particular the cooker hood model or type and/or in particular based on the first operating state.

In an embodiment, the mapped second operating state, Kc, is taken from a table stored in the memory unit, in particular of a user interface, UI, in particular with default data to pick up or obtain according to the sensor used that detects the kind of cooking process running on the hob.

In particular, for a hood with hob-to-hood, H2H, communication, the mapped second operating state, Kc, is taken from a table where the weights for different cooking methods are stored.

In particular, once the hob with a hob-to-hood, H2H, communication, message indicated to the cooker hood which speed to run and which cooking recipe is currently running on it, the mapped second operating state, Kc, in particular cooking factor, is taken accordingly for the calculation.

In another embodiment, if the cooker hood comprises a temperature sensor to detect the temperature sensed by the hood while it is working, the value of the mapped second operating state, Kc, will be taken by another table stored in the memory, in particular of a hood user interface, different from the table for hob-to-hood, H2H, communication, in which the related weight or mapped second operating states, Kc, at different temperatures are determined.

In particular, in case of missing indication of the temperature and/or kind of food cooked, the mapped second operating state, Kc, is not considered or is replaced by a default state stored in the memory unit.

In embodiments, the indication of the kind of food cooked is obtained from hob directly, in particular through a communication protocol, or through detection by sensors directly embedded in the cooker hood.

In embodiments, all the data to be used in the calculation and mainly to be considered for the mapped second operating states, in particular Kc factors, is pre-analyzed and calculated with lab measurements. Once the set of parameters to use is defined, the parameters can be resumed in tables to store into the memory unit, in particular of a user interface, of the cooker hood.

In an embodiment, the evaluation unit comprises a combining unit for combining, in particular multiplying, each of the mapped first and second operating states to a combined operating state.

In an embodiment, the evaluation unit comprises an accumulation unit for accumulating, in particular summing up, the combined operating states to accumulated operating states.

In an embodiment, the evaluation unit comprises a threshold unit for determining the third operating states based on whether the accumulated operating states have reached a threshold value.

In embodiments, given a threshold value, in particular a dirty threshold, in particular based on a filter kind, for example a grease filter type threshold or a charcoal filter type threshold, the third operating states, in particular the total dirtiness of the hood, D, can be calculated as follows:

$$D(speed, t, cooking) = Ks(speed) * t * Kc(cooking)$$

In particular, the third operating state, in particular dirtiness D, of the filter unit depends on the first operating state, in particular speed usage Ks, so that a higher air volume passing through the filter unit determines more dirtiness, the time, counter or duration t of usage and the second operating state, in particular cooking factor Kc, that represents the quantity of dirtiness per square meter given by the cooked food. As an example, boiling water for pasta is releasing less dirtiness than a frying cooking.

An example of the calculation is provided in the following where the cooking stage is composed by a number of, in particular three, phases.

Phase 1: 19:00 - 19:30 - Boiling Pasta - Speed 1

$$\mathtt{D1 = Ks(speed1) * 0,5 * Kc(Pasta) = 150 * 0,5 * 1}$$

Phase 2: 19:30 - 20:10 - Cook Meat - Speed 2

$$\mathtt{D2 = Ks(speed2) * 0,67 * Kc(Meat) = 250 * 0,67 * 2}$$

Phase 3: 29:10 - 20:30 - Fry potatoes - Speed 3

$$\mathtt{D2 = Ks(speed3) * 0,67 * Kc(Meat) = 400 * 0,33 * 3}$$

$$\mathtt{D = D1 + D2 + D3 = 75 + 335 + 396 = 896}$$

In embodiments, the accumulation unit is or comprises a counter, in particular a dirtiness indication and/or cleaning reminder counter, for taking into consideration the duration, speed and kind of cooking, to have a more precise calculation of the third operating state, in particular filter cleaning or replacement reminder value.

In an embodiment, the notification unit is or comprises a communication unit. In an embodiment, the notification unit is or comprises a remote notification unit. In an embodiment, the notification unit is or comprises a display. In an embodiment, the notification unit is or comprises an indicator, in particular lamp or LED.

In an embodiment, the notification unit is provided to trigger or show a message on a remote device, in particular on a mobile device and/or on an APP, for a connected hood for the user and/or to notify how long it takes to perform a next cleaning of the filter unit in a precise way.

In an embodiment, the communication unit sends or transmits the notification to a mobile device, for example a mobile phone, in particular over a wireless connection, which mobile device in turn indicates the notification, in particular displays the notification on a display unit.

Preferably, a cooker hood with the notification unit, in particular smarter cleaning reminder features, is able to show a message on an APP, in particular if a connected hood is used, for the user and to notify how long it takes to perform a next cleaning in a precise way.

Preferably, notification and/or indication to a user or customer is performed by implementation in a user interface or in general as part of a user philosophy.

In an embodiment, the cooker hood comprises at least one communication unit, in particular for communicating with a hob, more in particular as a hob-to-hood communication, for sending and/or receiving data, in particular to and/or from other devices, appliances and/or a hob, preferably for receiving indicators for operational states and/or for providing notifications to other appliances and/or to a mobile computing device.

In an embodiment, the arrangement or electronic system if equipped with sensors supports the possibility to communicate with at least one sensor.

In an embodiment, the connection unit comprises an infrared communication unit, in particular for receiving temperatures on coils of an induction hob.

In an embodiment, the connection unit is provided to be connected via a wireless connection, in particular a WiFi and/or Bluetooth connection, to a hob or any other home appliance, in particular an air conditioning or air purifier.

In an embodiment, the connection unit is provided to be connected via a wired connection, in particular an I2C communication bus or a directly wired solution, reading out a direct signal from at least one sensor.

In an embodiment, the filter unit comprises a filter element, in particular a grease filter element and/or a charcoal filter element.

In an embodiment, the fan unit is provided to extract cooking vapours from at least one cooking vessel and/or a hob placed underneath the cooker hood.

In particular, the fan unit can comprise one or more fans. More in particular, the fan unit can comprise one or more radial and/or axial fans. In particular, the fan unit can comprise one or more vortex fans for generating a vortex for sucking in an air stream.

In an embodiment, the fan unit is provided to extract cooking vapours sucked through and/or filtered by the filter unit.

In an embodiment, the cooker hood is provided to exhaust the cooking vapours outwards from an interior space to an exterior space.

In an embodiment, the cooker hood is provided to circulate the cooking vapours within an interior space.

In an embodiment, the cooker hood comprises an input unit for inputting operating parameters and/or states.

In an embodiment, the cooker hood comprises a display unit for displaying notifications.

In an embodiment, the cooker hood comprises a fan speed or power level setting unit for setting a speed and/or power level of the fan unit.

The invention further relates to an arrangement comprising a hob and a cooker hood according to the invention.

In particular, a hob according to the invention can be an induction hob. In particular, a hob according to the invention can comprise one or more sensors, a user interface and/or a communication interface. The communication interface can support a hob-to-hood communication unit.

The invention further relates to a method for providing a notification by a cooker hood according to the invention.

In particular, according to the method, a first series of first operating states, in particular indicators for rotational states, of the hood, in particular of the cooker hood, is combined with a second series of second operating states, in particular indicators for air dirtiness states, of or at the hood to a series of combined operating states, in particular cooking states.

In particular, the combined operating states are accumulated, in particular summed up, in an accumulation unit to accumulated operating states, until an, in particular predetermined, threshold value is reached.

In particular, based on whether or not the threshold value is reached, a notification, in particular filter cleaning reminder, is shown or triggered.

BRIEF DESCRIPTION OF THE DRAWINGS

The various aspects of the invention, including its particular features and advantages, will be readily understood from the following detailed description and the accompanying drawings, in which:

Fig. 1    shows schematically a cooker hood according to the invention,

Fig. 2    shows schematically detecting units and an evaluation unit according to the invention and

Fig. 3    shows a method according to the invention.

DETAILED DESCRIPTION OF PREFERRED EMBODIMENTS

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

It should be noted that the description and drawings merely illustrate the principles of the proposed invention. Those skilled in the art will be able to implement various arrangements that, although not explicitly described or shown herein, embody the principles of the invention.

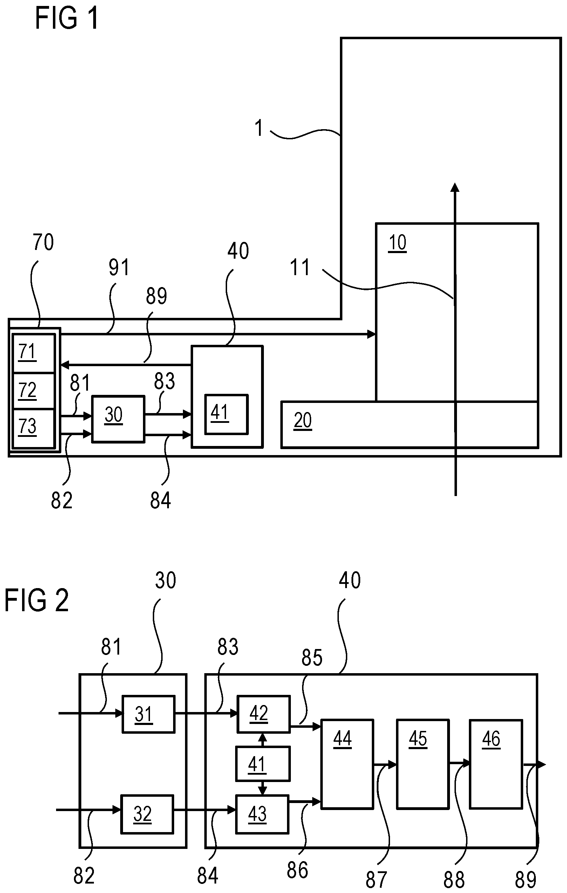

FIG 1 shows schematically a cooker hood 1 according to the invention. In particular, the proportions may vary between the figure and a cooker hood according to the invention.

The cooker hood 1 comprises a fan unit 10 for extracting cooking vapours, in particular from or on a not shown hob underneath the cooker hood 1. The cooker hood 1 further comprises a filter unit 20 for filtering the cooking vapours.

FIG 1 and 2 show schematically detecting units 31, 32 and an evaluation unit 40 according to the invention.

The cooker hood 1 comprises a first detecting unit 31 for detecting, in particular sensing, a first series of first operating states 83, in particular indicators for rotational states, of the cooker hood.

The cooker hood 1 comprises a second detecting unit 32 for detecting, in particular sensing, a second series of second operating states 84, in particular indicators for air dirtiness states, of or at the cooker hood.

The cooker hood 1 comprises an evaluation unit 40 for evaluating third operating states 89, in particular filter states, based at least on the first series of first operating states 83 and the second series of second operating states 84 of the cooker hood 1.

The cooker hood 1 comprises a notification unit 72, 73, in particular display unit, for indicating or triggering a notification, in particular a filter cleaning or replacement notification or reminder, based on the third operating states 63.

The invention in particular provides a cleaning reminder for the filter unit 20 present in the cooker hood 1 adaptable to the kind of aspiration done or food cooked, in order to indicate to a user a more precise information of when he needs to replace or clean a filter element in the filter unit 20.

Preferably, the possibility to weight the kind of aspiration and set the notification and/or reminder according to the quantity of air passing through the filter unit 20 improves the usability of the cooker hood 1, in particular in respect to user experience.

Preferably, an enhancement is to weight the dirtiness of the air flow and/or the quantity of air passing through the filter unit 20 in order to have a better evaluation of the cleaning frequency of the cooker hood 1, in particular the filter unit 20.

In particular, a more precise cleaning reminder counter according to the invention comprises no need of flow sensors. Instead, preferably sensor data available in or at the cooker hood 1 received from one or more, in particular already present, sensors, for example at least one temperature and/or air quality sensor, is used.

Preferably, the evaluation or calculation of the notification, in particular cleaning reminder, for the cooker hood 1 is based on the available information and sensors present within or near the cooker hood 1, without requiring particular sensors for this purpose.

An advantage of the invention is to reuse the sensors already embedded in or at the cooker hood 1 to get a better estimated dirtiness of the filter unit and set or trigger a filter cleaning reminder. In particular, no mounting of a dedicated flow sensor that will get dirty and is not precise along the time is necessary.

In particular, the physical amount of dirt deposited on the filter unit 20 or filter element, or the air passing it are not measured. In particular, the invention is overcoming the problem of cleaning reminder indication based on flow sensors since flow sensors get dirty and are not reliable along the time.

Advantageously, a more precise indication for the cleaning of the filter unit 20 tuned on the, preferably real, air flow passing through the filter unit 20 and the kind of cooking performed related to the dirtiness generated is provided.

Preferably, the cooker hood 1 according to the invention, in particular with smarter cleaning reminder features, is able to avoid unnecessary cleaning on the filter unit 20 if not really needed. Normally grease filters can be cleaned, but charcoal filters need to be replaced.

The first detecting unit 31 comprises no sensor and/or detects a fan speed as first operating state 84, in particular based on a set power level of the cooker hood 1, in particular as sensor less solution.

In an embodiment, the second detecting unit 32 comprises at least one sensor.

In an embodiment, the at least one sensor is an air quality, temperature and/or humidity sensor placed on or at the cooker hood 1, wherein the second operating state 62 is or corresponds to an air quality, temperature and/or humidity detected by the at least one sensor.

In a further embodiment, the at least one sensor comprises a sensing unit 73, preferably a camera, placed, installed or mounted on or at the cooker hood 1 for identifying the type of food cooked, wherein the second operating state 84 is or corresponds to a type of food identified by means or the sensing unit 73.

In particular, the second operating state 84 is a cooking factor, Kc. In particular, signals and/or inputs are used for evaluation of the cooking factor, Kc.

In an embodiment, the temperature sensor is placed, mounted or installed on the cooker hood 1 or on a not shown hob, in particular at at least one cooking zone of the hob.

In an embodiment, the air quality sensor is a Total Volatile Organic Components, TVOC, sensor placed on or at the cooker hood 1. Advantageously, a Total Volatile Organic Components, TVOC, sensor to measure the grease particles on the air and hence dirtiness of the air is used, in particular for detecting the series of second operating states 84.

In one or more further embodiments, the food cooked is detected using food recognition capabilities from camera sensors or signals coming from a hob or from a smartphone, in particular for detecting the series of second operating states 84.

According to another embodiment, the second detecting unit 32 comprises no sensor.

In an embodiment, the second detecting unit 32 is provided to detect the second operating states 84 from an interface unit 70.

In a further embodiment or additionally, the second detecting unit 32 the second detecting unit is provided to detect the second operating state 84 by means of a user input on a user interface.

In a further embodiment or additionally, the second detecting unit 32 the second detecting unit is provided to detect the second operating state 84 by receiving data from a hob, in particular place under the cooker hood.

In a further embodiment or additionally, the second detecting unit 32 the second detecting unit is provided to detect the second operating state 84 by receiving data from another appliance, in particular an air purifier or air conditioner.

In an embodiment, the interface unit 70 comprises an input unit 73 provided to receive user inputs on a user interface.

In an embodiment, the interface unit 70 comprises a communication unit 73 provided to receive data from a hob, in particular placed under the cooker hood.

In an embodiment, the interface unit 70 comprises a communication unit 73 provided to receive data from another appliance, in particular an air purifier or air conditioner.

In an embodiment, a second operating state 84 is or corresponds to a user input, data from a hob and/or data from another appliance, in particular received from the interface unit 70.

In an embodiment, second operating states 84 from other connected appliances such as air purifiers, air conditioners, in particular in the kitchen and/or the same room or interior space, are communicated to the cooker hood 1.

In a further embodiment or additionally, the second detecting unit 32 detects the second operating states 84 from a hob by means of a communication unit 73, in particular by means of a hob-to-hood communication for transmitting which recipe or food kind is under cooking process at the hob at a point in time.

In a further embodiment or additionally, the second detecting unit 32 detects the second operating states 84 from a hob by means of a communication unit 73, in particular by means of a hob-to-hood communication for transmitting the temperatures of the cooking zones of the hob at a point in time.

Preferably, based on the understanding of the food cooked as useful information, the second operating states 84 are obtained, as a basis for the notification, in particular for a cleaning reminder estimation.

Preferably, the second operating state 84 is a cooking factor.

In an embodiment, the second detecting unit 32 is provided to process input signals 82 from at least one connected device and to take a decision which of the input signals to use as second operating states.

In an embodiment, the input signals are seen as sensor values being part of an electronics system present for or at the cooker hood 1.

The evaluation unit 40 comprises a memory unit 41 for storing data and/or tables.

The evaluation unit 40 comprises a first mapping unit 42 for mapping each of the first operating states 83 to a mapped first operating state 85 by means of a first mapping table stored in the memory unit 41.

The evaluation unit 40 comprises a second mapping unit 43 for mapping each of the second operating states 84 to a mapped second operating state 86 by means of a second mapping table stored in the memory unit 41.

In an embodiment, the mapped first operating state, Ks, is a value taken from a table characteristic stored in the memory unit 41 of the cooker hood 1, in particular based on a cooker hood model or type.

In an embodiment, the mapped second operating state, Kc, is taken from a table stored in the memory unit 41, in particular of a user interface, UI, in particular with default data to pick up or obtain according to the sensor used that detects the kind of cooking process running on a hob.

In particular, for a hood with hob-to-hood, H2H, communication, the mapped second operating state, Kc, is taken from a table where the weights for different cooking methods are stored.

In particular, once the hob with a hob-to-hood, H2H, communication, message indicated to the cooker hood 1 which speed to run and which cooking recipe is currently running on it, the mapped second operating state, Kc, in particular cooking factor, is taken accordingly for the calculation.

In another embodiment, if the cooker hood 1 comprises a temperature sensor to detect the temperature sensed by the cooker hood 1 while it is working, the value of the mapped second operating state, Kc, will be taken by another table stored in the memory, in particular of the hood UI, different from the one for hob-to-hood, H2H, communication, in which the related weight or mapped second operating states, Kc, at different temperatures are determined.

In particular, in case of missing indication of the temperature and/or kind of food cooked, the mapped second operating state, Kc, is not considered or is replaced by a default state stored in the memory.

In embodiments, the indication of the kind of food cooked is obtained from a hob directly, in particular through a communication protocol, or through detection by sensors directly embedded in the cooker hood 1.

In embodiments, all the data to be used in the calculation and mainly to be considered for the mapped second operating states, in particular Kc factors, is pre-analyzed and calculated with lab measurements. Once the set of parameters to use is defined, the parameters can be resumed in tables to store into the memory unit 41, in particular of the UI, of the cooker hood 1.

The evaluation unit 40 comprises a combining unit 44 for combining, in particular multiplying, each of the mapped first 85 and second 86 operating states to a combined operating state 87.

The evaluation unit 40 comprises an accumulation unit 45 for accumulating, in particular summing up, the combined operating states 87 to accumulated operating states 88.

The evaluation unit 40 comprises a threshold unit 46, 47 for determining the third operating states 89 based on whether the accumulated operating states 88 have reached a threshold value.

In embodiments, given a predetermined threshold value, in particular a dirty threshold, in particular based on a filter kind, for example a grease filter type threshold or a charcoal filter type threshold, the third operating states, in particular the total dirtiness of the hood, D, can be calculated as follows:

$$D(speed, t, cooking) = Ks(speed) * t * Kc(cooking)$$

In particular, the third operating state, in particular dirtiness D, of the filter unit depends on the first operating state, in particular speed usage Ks, so that a higher air volume passing through the filter unit determines more dirtiness, the time t of usage and the second operating state, in particular cooking factor Kc, that represents the quantity of dirtiness, for example per square meter and/or given by the cooked food. As an example, boiling water for pasta is releasing less dirtiness than a frying cooking.

An example of the calculation is provided in the following where the cooking stage is composed by more phases.

Phase 1: 19:00 - 19:30 - Boiling Pasta - Speed 1

$$D1 = Ks(speed1) * 0,5 * Kc(Pasta) = 150 * 0,5 * 1$$

Phase 2: 19:30 - 20:10 - Cook Meat - Speed 2

$$D2 = Ks(speed2) * 0,67 * Kc(Meat) = 250 * 0,67 * 2$$

Phase 3: 29:10 - 20:30 - Fry potatoes - Speed 3

$$D2 = Ks(speed3) * 0,67 * Kc(Meat) = 400 * 0,33 * 3$$

$$D = D1 + D2 + D3 = 75 + 335 + 396 = 896$$

In embodiments, the accumulation unit 45 is or comprises a counter, in particular a dirtiness indication and/or cleaning reminder counter, for taking into consideration the duration, speed and kind of cooking, to have a more precise calculation of the third operating state, in particular filter cleaning or replacement reminder value.

The notification unit 70 is or comprises at least one, more or each of the following units:

- a communication unit 73,
- a remote notification unit 73,
- a display unit 72,
- an indicator 72, in particular lamp or one or more LEDs.

In an embodiment, the notification unit 70 is provided to show a message on a remote device, in particular on a mobile device and/or on an APP, for a connected hood for the user and/or to notify how long it takes to perform a next cleaning of the filter unit in a precise way.

In an embodiment, a communication unit 73 sends a notification to a mobile device, for example a mobile phone, which in turn displays the notification on a display unit.

Preferably, a cooker hood 1 with the notification unit, in particular smarter cleaning reminder features, is able to show a message on an APP, in particular if a connected hood is used, for the user and to notify how long it takes to perform a next cleaning in a precise way.

Preferably, notification and/or indication to a user or customer is performed by implementation in a user interface or in general as part of a user philosophy.

In an embodiment, a communication unit 73, in particular for communicating with a hob, more in particular as a hob-to-hood communication, is provided for sending and/or receiving data, in particular to and/or from other devices, appliances and/or a hob, preferably for receiving indicators 81, 82 for operational states and/or for providing notifications to other appliances and/or to a mobile computing device.

In an embodiment, the arrangement or electronic system if equipped with sensors supports the possibility to communicate with at least one sensor.

In an embodiment, the communication unit 73 comprises an infrared communication unit, in particular for receiving temperatures on heating coils of an induction hob.

In an embodiment, the communication unit 73 is provided to be connected via a wireless connection, in particular a WiFi and/or Bluetooth connection, to a hob or any other home appliance, in particular an air conditioning or air purifier.

In an embodiment, the communication unit 73 is provided to be connected via a wired connection, in particular an I2C communication bus or a directly wired solution, reading out a direct signal from at least one sensor.

The filter unit 20 comprises a filter element, in particular a grease filter element and/or a charcoal filter element.

The fan unit 10 is provided to extract cooking vapours from at least one cooking vessel and/or a hob placed underneath the cooker hood 1.

The fan unit 10 is provided to extract cooking vapours sucked through and/or filtered by the filter unit 20.

The cooker hood 1 is provided to exhaust the cooking vapours outwards from an interior space to an exterior space. Alternatively or in addition, the cooker hood 1 is provided to circulate the cooking vapours within an interior space.

The cooker hood 1 comprises an input unit for inputting operating parameters and/or states. In an embodiment, the cooker hood 1 comprises a display unit 72 for displaying notifications.

The cooker hood 1 comprises a fan speed or power level setting unit 71 for setting a speed and/or power level of the fan unit 10.

According to an embodiment, an arrangement comprising a hob and a cooker hood is provided. According to an embodiment, a method for providing a notification by a cooker hood 1 is provided.

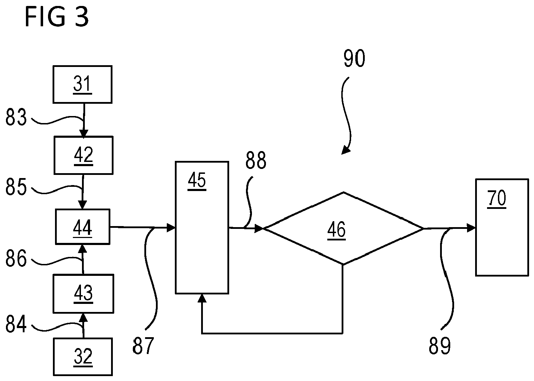

According to the method as indicated in FIG 3, a first series of first operating states 83, in particular indicators for rotational states, of the cooker hood 1, is combined with a second series of second operating states 84, in particular indicators for air dirtiness states, of or at the cooker hood 1 to a series of combined operating states 87, in particular cooking states. The combined operating states 87 are accumulated, in particular summed up, in an accumulation unit 45 to accumulated operating states 88, until an, in particular predetermined, threshold value 46 is reached.

Based on whether or not the threshold value 46 is reached, third operating states 89 are obtained and a notification, in particular filter cleaning reminder, is shown or triggered in a notification unit 70.

Hence, the notification, in particular filter cleaning reminder, is shown or triggered if the accumulated operating states 88 exceed a predetermined threshold value 46.

List of reference numerals

| | |
|---|---|
| 1 | cooker hood |
| 10 | fan unit |
| 11 | cooking vapours |
| 20 | filter unit |
| 30 | detecting unit |
| 40 | evaluation unit |
| 41 | memory unit |
| 42, 43 | mapping units |
| 44 | combining unit |
| 45 | accumulation unit |
| 46 | threshold unit |
| 70 | notification unit, interface unit |
| 71 | fan speed setting unit |
| 72 | display unit |
| 73 | input unit, communication unit |
| 81, 82 | indicators |
| 83 | first operating states |
| 84 | second operating states |
| 85 | mapped first operating states |
| 86 | mapped second operating states |
| 87 | combined operating states |
| 88 | accumulated operating states |
| 89 | third operating states |
| 90 | state diagram |

**Claims**

1. A cooker hood (1), comprising

   - a fan unit (10) for extracting cooking vapours (11),

- a filter unit (20) for filtering the cooking vapours (11),
- a first detecting unit (31) for detecting, in particular sensing, a first series of first operating states (83), in particular indicators for rotational states, of the hood,
- a second detecting unit (32) for detecting, in particular sensing, a second series of second operating states (84), in particular indicators for air dirtiness states, of or at the hood,
- an evaluation unit (40) for evaluating third operating states (89), in particular filter states, based at least on the first series of first operating states (83) and the second series of second operating states (84) of the hood (1) and
- a notification unit (72, 73), in particular display and/or communication unit, for indicating or triggering a notification, in particular a filter cleaning or replacement notification or reminder, based on the third operating states (63).

2. A cooker hood according to claim 1,

- wherein the first detecting unit (31) comprises no sensor and/or
- wherein the first detecting unit (31) is provided to detect the second operating states (83) from an interface unit (70), in particular a fan speed or power setting unit (71), and/or
- wherein the first operating state (83) is or corresponds to a power level of the cooker hood, in particular set on a fan speed or power level setting unit (71) and/or as sensor less solution.

3. A cooker hood according to claim 1 or 2, wherein the second detecting unit (32) comprises at least one sensor unit, wherein in particular

- the at least one sensor unit is an air quality, temperature and/or humidity sensor unit placed on or at the cooker hood, wherein the second operating state (84) is or corresponds to an air quality, temperature and/or humidity, in particular detected by the at least one sensor unit.

4. A cooker hood according to anyone of the preceding claims, wherein the second detecting unit (32) comprises at least one sensor unit, wherein in particular

- the at least one sensor unit comprises a camera, preferably placed on or at the cooker hood, for identifying types of food cooked, and/or
- wherein a second operating state (84) is or corresponds to a type of food, in particular identified by means of the sensing unit.

5. A cooker hood according to anyone of the preceding claims,

- wherein the second detecting unit (32) comprises no sensor and/or
- wherein the second detecting unit (32) is provided to detect the second operating states (84) from an interface unit (70) and/or
- wherein the interface unit (70)

- comprises an input unit (73) provided to receive user inputs on a user interface and/or
- comprises a communication unit (73) provided to receive data from a hob, in particular placed under the cooker hood, and/or
- comprises a communication unit (73) provided to receive data from another appliance, in particular an air purifier or air conditioner and/or

- wherein a second operating state (84) is or corresponds to a user input, data from a hob and/or data from another appliance, in particular received from the interface unit (70).

6. A cooker hood according to anyone of the preceding claims, wherein the evaluation unit (40) comprises one or more, in particular each, of the following units:

- a memory unit (41) for storing data, in particular mapping tables,
- a first mapping unit (42) for mapping each of the first operating states (83) to a mapped first operating state (85) by means of a first mapping table stored in the memory unit (41),
- a second mapping unit (43) for mapping each of the second operating states (84) to a mapped second operating state (86) by means of a second mapping table stored in the memory unit (41).

7.  A cooker hood according to anyone of the preceding claims, wherein the evaluation unit (40) comprises one or more, in particular each, of the following units:

    - a combining unit (44) for combining, in particular multiplying, each of the, in particular mapped, first (85) and second (86) operating states to a combined operating state (87),
    - an accumulation unit (45) for accumulating, in particular summing up or counting, the combined operating states (87) to accumulated operating states (88) and
    - a threshold unit (46) for determining the third operating states (89) based on whether the accumulated operating states (88) have reached an, in particular predetermined, threshold value.

8.  A cooker hood according to anyone of the preceding claims, wherein the notification unit (70) is or comprises at least one or more of the following:

    - a communication unit (73),
    - a remote notification unit,
    - a display unit (72),
    - an indicator (72), in particular a lamp or LED.

9.  A cooker hood according to anyone of the preceding claims, comprising at least one communication unit (73), in particular for communicating with a hob, more in particular as a hob-to-hood communication, for sending and/or receiving data, in particular to and/or from other devices, appliances and/or a hob, preferably for receiving operational states (83, 84) or indicators (81, 82) for operational states and/or for providing notifications to other appliances and/or to a mobile computing device.

10. A cooker hood according to anyone of the preceding claims,

    - wherein the filter unit (20) comprises at least one filter element, in particular a grease filter element and/or a charcoal filter element.

11. A cooker hood according to anyone of the preceding claims,

    - wherein the fan unit (10) is provided to extract cooking vapours and/or an air flow (11), in particular from at least one cooking vessel and/or a hob placed underneath the cooker hood (1) and/or
    - wherein the fan unit (10) is provided to extract, in particular as an air flow, cooking vapours (11) sucked through and/or filtered by the filter unit (20),
    - wherein the fan unit (10) comprises one or more fans, in particular one or more radial and/or axial fans or one or more vortex fans for generating a vortex for sucking in an air stream.

12. A cooker hood according to anyone of the preceding claims,

    - wherein the cooker hood (1) is provided to exhaust the cooking vapours and/or an air flow (11) outwards from an interior space to an exterior space of a house and/or
    - wherein the cooker hood (1) is provided to circulate the cooking vapours and/or an air flow (11) within an interior space of a house.

13. A cooker hood according to anyone of the preceding claims,

    - wherein the cooker hood (1) comprises an input unit (73) for inputting operating parameters and/or states (83,84) and/or
    - wherein the cooker hood (1) comprises a display unit (72) for displaying notifications and/or
    - wherein the cooker hood (1) comprises a fan speed or power level setting unit (71) for setting a speed and/or power level of the fan unit (10).

14. An arrangement comprising a hob and a cooker hood (1) according to anyone of the preceding claims.

15. A method for providing a notification by a cooker hood (1) according to anyone of the preceding claims.

FIG 1

70
91
89
40
11
10
1

71
72
73

81
82
83
84

30

41

20

FIG 2

30
40

81
83
85

31
42
44
45
46

41

32
43

82
84
86
87
88
89

## FIG 3

Europäisches
Patentamt

European
Patent Office

Office européen
des brevets

# EUROPEAN SEARCH REPORT

Application Number

EP 22 15 5236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 083103 A1 (BSH BOSCH SIEMENS HAUSGERAETE [DE]) 21 March 2013 (2013-03-21) * paragraph [0049]; claims 1,2,9; figure 1 * | 1-15 | INV. F24C15/20 |
| X | DE 10 2015 218007 A1 (BSH HAUSGERAETE GMBH [DE]) 23 March 2017 (2017-03-23) * claims 1, 6 * | 1-15 | |
| X | US 2005/224069 A1 (PATIL MAHENDRA M [IN] ET AL) 13 October 2005 (2005-10-13) * figures 1-3,11, 12 * | 1-15 | |
| X | EP 2 824 395 A2 (E G O ELEKTRO GERÄTEBAU GMBH [DE]) 14 January 2015 (2015-01-14) * the whole document * | 1-15 | |

TECHNICAL FIELDS
SEARCHED (IPC)

F24C

The present search report has been drawn up for all claims

| Place of search | Date of completion of the search | Examiner |
|---|---|---|
| The Hague | 22 June 2022 | Meyers, Jerry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 5236

This annex lists the patent family members relating to the patent documents cited in the above-mentioned European search report.
The members are as contained in the European Patent Office EDP file on
The European Patent Office is in no way liable for these particulars which are merely given for the purpose of information.

22-06-2022

| Patent document cited in search report | Publication date | Patent family member(s) | Publication date |
|---|---|---|---|
| DE 102011083103 A1 | 21-03-2013 | DE 102011083103 A1<br>EP 2570736 A1 | 21-03-2013<br>20-03-2013 |
| DE 102015218007 A1 | 23-03-2017 | NONE | |
| US 2005224069 A1 | 13-10-2005 | NONE | |
| EP 2824395 A2 | 14-01-2015 | DE 102013213546 A1<br>EP 2824395 A2 | 15-01-2015<br>14-01-2015 |

EPO FORM P0459

For more details about this annex : see Official Journal of the European Patent Office, No. 12/82

**EP 4 224 070 A1**

**Patent documents cited in the description**

- EP 314085 A1
- US 20070023420 A1
- DE 102005025787 B3
- US 2006278216 A1